# EUROPÄISCHE PATENTSCHRIFT

(11) **EP 2 789 779 B1**
(45) Veröffentlichungstag und Bekanntmachung des Hinweises auf die Patenterteilung: **26.12.2018**
(21) Anmeldenummer: 14164041.7
(22) Anmeldetag: 09.04.2014
(51) Int. Cl.: E05D 13/00, E05C 17/60, B60J 5/06

(54) **Fixiereinrichtung für eine Schiebetür eines Kraftfahrzeugs**
Fixing device for a sliding door of a motor vehicle
Dispositif de fixation pour une porte coulissante d'un véhicule automobile

(30) Priorität: 09.04.2013 DE 202013003241 U
(43) Veröffentlichungstag der Anmeldung: 15.10.2014
(73) Patentinhaber: Ford-Werke GmbH, 50735 Köln (DE); Brose Schliesssysteme GmbH & Co. KG, 42369 Wuppertal (DE)
(72) Erfinder: Häger, Ole, 42653 Solingen (DE); Dhanale, Abhijeet, Pune - 411026 (IN); Birajdar, Vijay, Pune - 411035 (IN); Hahnenberg, Daniel, 51069 Köln (DE); Kreuz, Thomas, 53894 Mechernich (DE); Benderoth, Thomas, 51647 Gummersbach (DE); Lehmkuhl, Mirko, 40883 Ratingen (DE); Jackobs, Werner, 51467 Bergisch Gladbach (DE); Reifenstein, Lars, 50999 Köln (DE)
(74) Vertreter: Gottschald, Jan

(56) Entgegenhaltungen:
- EP-A2- 0 791 709
- EP-A2- 1 617 031
- FR-A1- 2 900 184
- US-A1- 2006 202 507

## Beschreibung

Die vorliegende Erfindung betrifft eine Fixiereinrichtung für eine Schiebetür eines Kraftfahrzeugs sowie eine Schiebetüranordnung eines Kraftfahrzeugs mit einer Schiebetür und einer Fixiereinrichtung.

Der Begriff "Schiebetür" ist vorliegend weit zu verstehen. Er umfasst alle Türen eines Kraftfahrzeugs, die zumindest über einen Teil ihres Verstellwegs jedenfalls auch translatorisch verschoben werden. Insoweit umfasst der Begriff "Schiebetür" unter anderem Seitentüren und Hecktüren, die im Wesentlichen in horizontaler Richtung verschiebbar sind. Denkbar ist aber auch, dass die in Rede stehende Schiebetür in vertikaler Richtung verschiebbar ist.

Schiebetüren haben sich zwischenzeitlich nicht nur bei Lieferwagen und Kleintransportern, sondern auch bei Personenwagen durchgesetzt. Mit dieser Entwicklung geht der Wunsch nach einem besonders hohen Benutzungskomfort einher.

Im Rahmen des angestrebten Benutzungskomforts ist unter anderem maßgeblich, dass ein müheloses Be- und Entladen bei in der Offenstellung befindlicher Schiebetür möglich ist. Hierfür ist regelmäßig eine Fixiereinrichtung vorgesehen, die eine sichere Fixierung der Schiebetür in ihrer Offenstellung garantiert.

Die bekannte Fixiereinrichtung (EP 1 617 031 A2), von der die Erfindung ausgeht, ist in einen Fixierzustand bringbar, in dem die Fixiereinrichtung die in der Offenstellung befindliche Schiebetür an der Kraftfahrzeugkarosserie fixiert. Die hierfür vorgesehene Fixier-Kraftwirkungskette umfasst ein als Drehfalle ausgestaltetes Eingriffselement, das mittels einer Sperrklinke in seiner Fixierstellung gehalten wird. Ein besonders hoher Benutzungskomfort ergibt sich bei der bekannten Fixiereinrichtung bereits dadurch, dass die Fixiereinrichtung mittels einer Antriebsanordnung motorisch in den Lösezustand bringbar ist, in dem die Schiebetür in Schließrichtung freigegeben ist.

Optimierungspotential bei der bekannten Fixiereinrichtung ergibt sich für den Fall, dass eine manuelle Schließbetätigung der in der Offenstellung fixierten Schiebetür vorgenommen wird, ohne dass die Fixiereinrichtung zuvor in den Lösezustand gebracht worden ist. Dies kann beispielsweise bei einer unsachgemäßen Bedienung oder aber im Fehlerfall, insbesondere bei einem Ausfall der Antriebsanordnung und/oder der Versorungsspannung, auftreten. Dies wird grundsätzlich als Einschränkung des Benutzungskomforts verstanden. EP 0 791 709 A2 offenbart eine Fixiereinrichtung nach dem Oberbegriff der Ansprüche 1 und 9.

Der Erfindung liegt das Problem zugrunde, die bekannte Fixiereinrichtung derart auszugestalten und weiterzubilden, dass der Benutzungskomfort gesteigert wird.

Das obige Problem wird bei einer Fixiereinrichtung der eingangs genannten Art durch die Merkmale des kennzeichnenden Teils von Anspruch 1 und durch die Merkmale des kennzeichnenden Teils von Anspruch 9 gelöst.

Wesentlich ist die grundsätzliche Überlegung, dass die Fixiereinrichtung eine manuelle Schließ-Schiebebetätigung auch dann erlaubt, wenn die Fixiereinrichtung nicht zuvor in den Lösezustand gebracht worden ist. Hierfür ist der Fixier-Kraftwirkungskette der Fixiereinrichtung ein nachgiebiger Abschnitt zugeordnet, der bei einer manuellen Schließ-Schiebebetätigung der in der Offenstellung fixierten Schiebetür, die mit Überlast erfolgt, nachgibt und dadurch die Schiebetür in Schließrichtung freigibt. Hierfür wird der Benutzer regelmäßig eine manuelle Kraft auf die in der Offenstellung fixierte Schiebetür ausüben. Sofern diese Betätigungskraft die Überlast, die oberhalb einer vorbestimmten Grenzlast liegt, übersteigt, gibt der nachgiebige Abschnitt nach, so dass die Schiebetür in Schließrichtung freigegeben wird.

Mit der vorschlagsgemäßen Lösung ergeben sich also zwei Möglichkeiten, die in der Offenstellung fixierte Schiebetür in Schließrichtung freizugeben. Die erste Möglichkeit betrifft den normalbetriebsgemäßen Fall, in dem die Fixiereinrichtung motorisch in den Lösezustand gebracht wird, bevor eine manuelle Schließ-Schiebebetätigung erfolgt. Die zweite Möglichkeit besteht darin, dass die manuelle Schließ-Schiebebetätigung mit Überlast vorgenommen wird, ohne dass die Fixiereinrichtung zuvor in den Lösezustand gebracht worden ist. Hierfür ist der vorschlagsgemäße, nachgiebige Abschnitt der Fixier-Kraftwirkungskette vorgesehen.

Die obigen, an sich zueinander redundanten Möglichkeiten der Freigabe der in der Offenstellung fixierten Schiebetür gewährleisten einen besonders hohen Benutzungskomfort, da der Benutzer nicht mehr an den bestimmungsgemäßen Gebrauch unter Verwendung der Antriebsanordnung gebunden ist.

Auch in konstruktiver Hinsicht ist die vorschlagsgemäße Lösung vorteilhaft. Dies liegt zum einen daran, dass eine Überwachung im Hinblick auf eine unsachgemäße Schließ-Schiebebetätigung nicht vorgenommen werden muss. Ohne die vorschlagsgemäße Lösung wäre eine solche Überwachung erforderlich, um die Komponenten der Fixier-Kraftwirkungskette im Überlastfall vor Zerstörung zu schützen. Zum anderen ist vorteilhaft, dass die Belastung der Fixier-Kraftwirkungskette durch den nachgiebigen Abschnitt stets in einem vorbestimmten Rahmen bleibt.

Die vorschlagsgemäße Lösung lässt sich mit einfachen Mitteln auf kompakte Weise ausgestalten.

Erfindungsgemäß ist ein verstellbares Eingriffselement für den fixierenden Eingriff vorgesehen, das dem nachgiebigen Abschnitt zugeordnet ist. Damit gibt das Eingriffselement als solches einer manuellen Schließ-Schiebebewegung mit Überlast nach. Dieses Nachgeben bewirkt ein Lösen des fixierenden Eingriffs und im Ergebnis die Freigabe der Schiebetür in Schließrichtung.

Erfindungsgemäß handelt es sich nach Anspruch 1 bei dem Eingriffselement um eine zweiteilige Drehfalle, wobei die Nachgiebigkeit des Eingriffselements auf eine Federvorspannung zwischen den beiden Drehfallenteilen zurückgeht. Durch die Schwenkbarkeit der beiden Drehfallenteile ist diese Variante besonders robust in mechanischer Hinsicht.

Bei der erfindungsgemäßen Ausgestaltung gemäß Anspruch 9 ist das Eingriffselement als Fixier-Sperrklinke ausgestaltet, deren Schwenklagerung bei einer manuellen Schließ-Schiebebetätigung mit Überlast nachgibt. Diese Variante lässt sich mit besonders wenigen Teilen aufbauen.

Nach einer weiteren Lehre gemäß Anspruch 10, wird eine Schiebetüranordnung eines Kraftfahrzeugs mit einer Schiebetür, die an der Kraftfahrzeugkarosserie zwischen einer Offenstellung und einer Schließstellung verstellbar ist, sowie mit einer erfindungsgemäßen Fixiereinrichtung für die Schiebetür beansprucht.

Im Folgenden wird die Erfindung anhand einer lediglich ein Ausführungsbeispiel darstellenden Zeichnung näher erläutert. In der Zeichnung zeigt
- Fig. 1: in schematischer Darstellung ein Kraftfahrzeug mit einer vorschlagsgemäßen Schiebetüranordnung,
- Fig. 2: die Fixiereinrichtung der Schiebetüranordnung gemäß Fig. 1 während einer Öffnungs-Schiebebetätigung vor dem Erreichen der Offenstellung der Schiebetür bei einer Schnittansicht entlang der Schnittlinie II-II,
- Fig. 3: die Fixiereinrichtung gemäß Fig. 2 bei in der Offenstellung fixierter Schiebetür,
- Fig. 4: die Fixiereinrichtung gemäß Fig. 2 während der Schließ-Schiebebetätigung bei vorheriger Verstellung der Fixiereinrichtung in den Lösezustand,
- Fig. 5: die Fixiereinrichtung gemäß Fig. 2 während einer manuellen Schließ-Schiebebetätigung ohne vorherige Verstellung der Fixiereinrichtung in den Lösezustand,
- Fig.6: eine weitere Ausführungsform einer Fixiereinrichtung für eine Schiebetüranordnung gemäß Fig. 1 während einer Öffnungs-Schiebebetätigung vor dem Erreichen der Offenstellung der Schiebetür bei einer Schnittansicht entlang der Schnittlinie II-II,
- Fig. 7: die Fixiereinrichtung gemäß Fig. 6 bei in der Offenstellung fixierter Schiebetür,
- Fig. 8: die Fixiereinrichtung gemäß Fig. 6 während einer Schließ-Schiebebetätigung bei vorheriger Verstellung der Fixiereinrichtung in den Lösezustand und
- Fig. 9: die Fixiereinrichtung gemäß Fig. 6 während einer Schließ-Schiebebetätigung ohne vorherige Verstellung der Fixiereinrichtung in den Lösezustand.

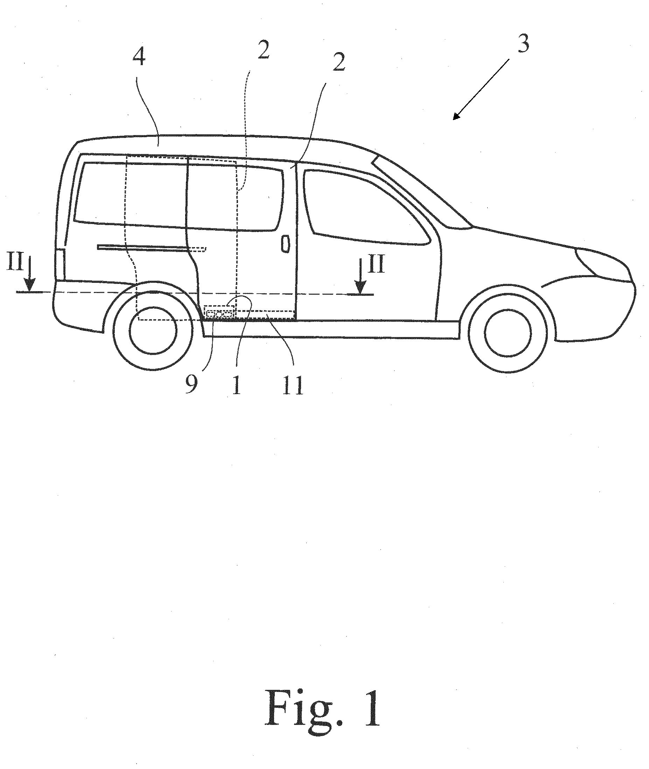

Die in zwei bevorzugten Ausführungsformen in der Zeichnung dargestellte Fixiereinrichtung 1 ist einer Schiebetür 2 eines Kraftfahrzeugs 3 zugeordnet, die an der Kraftfahrzeugkarosserie 4 zwischen einer Offenstellung und einer Schließstellung verstellbar ist. Die Offenstellung der Schiebetür 2 ist in Fig. 1 in gestrichelter Linie, die Schließstellung ist in Fig. 1 in durchgezogener Linie angedeutet.

In der Zeichnung dargestellt sind nur die für die Erläuterung der Erfindung wesentlichen Teile der jeweiligen Fixieranordnung 1.

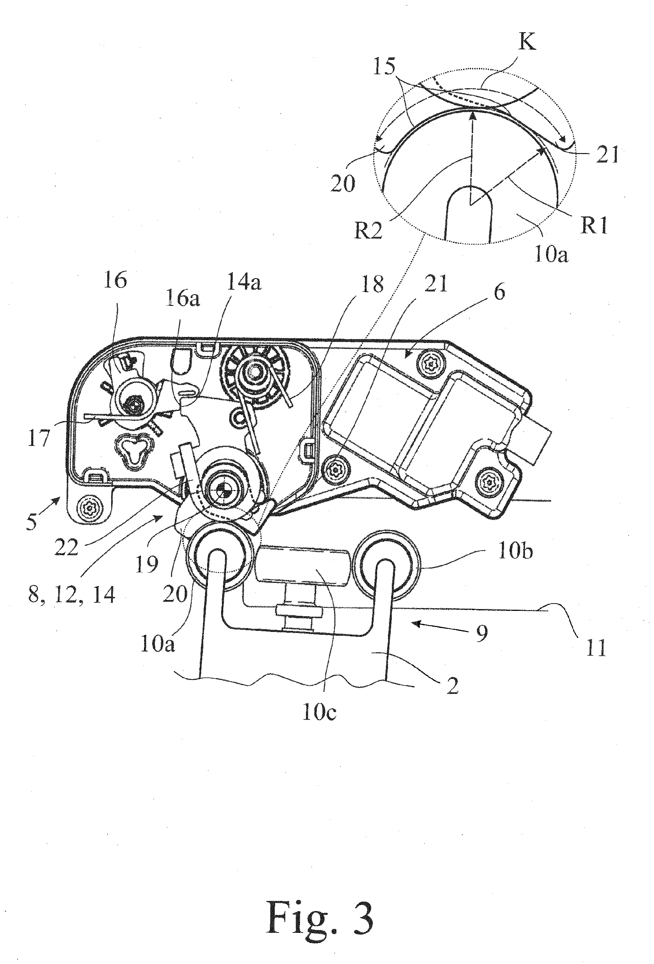

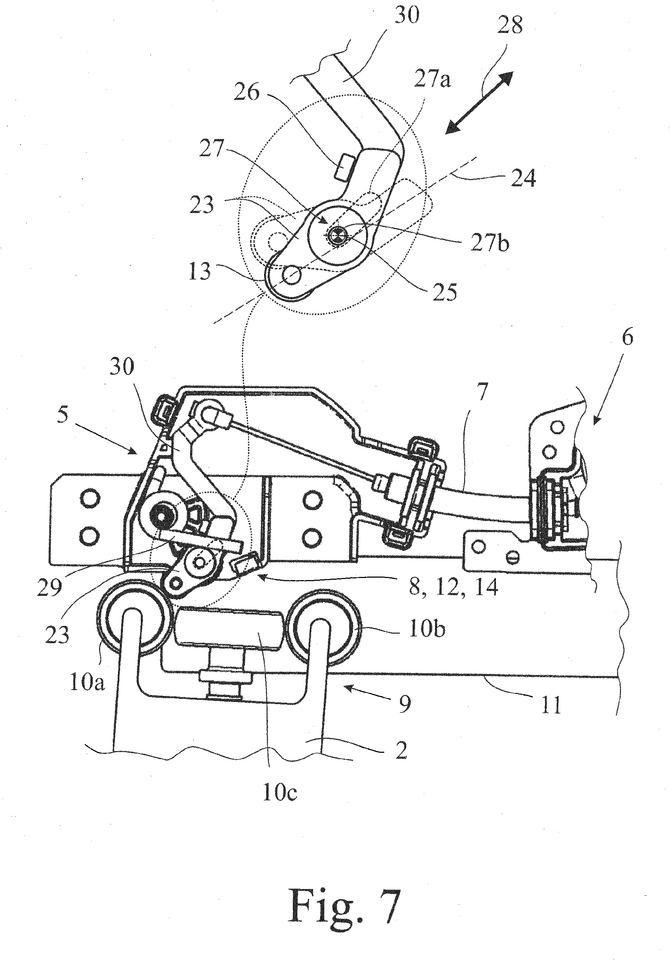

Die Aufgabe der Fixiereinrichtung 1 besteht darin, die Schiebetür 2 in ihrer Offenstellung zu fixieren. Hierfür ist die Fixiereinrichtung 1 in einen Fixierzustand bringbar, in dem sie die in der Offenstellung befindliche Schiebetür 2 im montierten Zustand über eine Fixier-Kraftwirkungskette 5 an der Kraftfahrzeugkarosserie 4 fixiert (Fig. 3, 7).

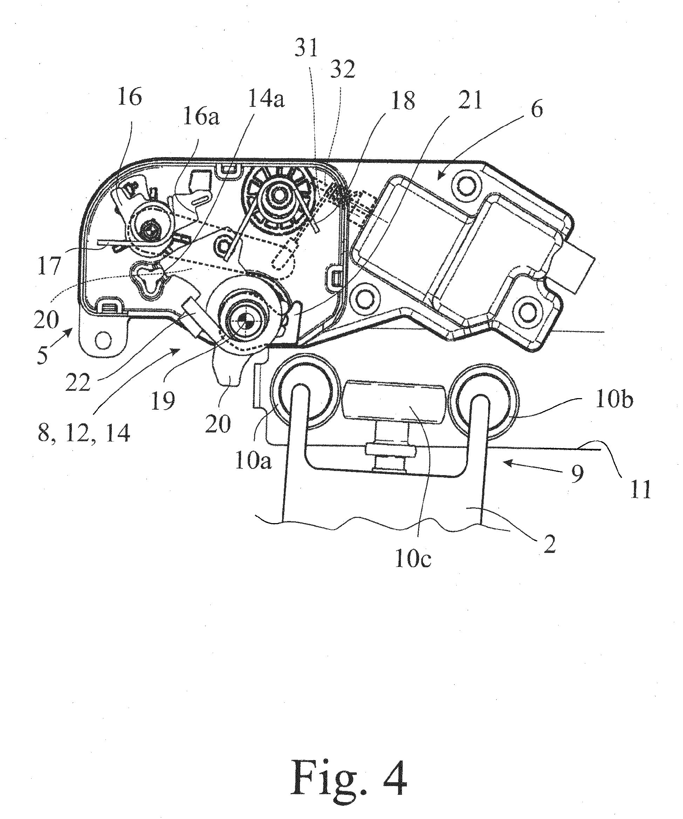

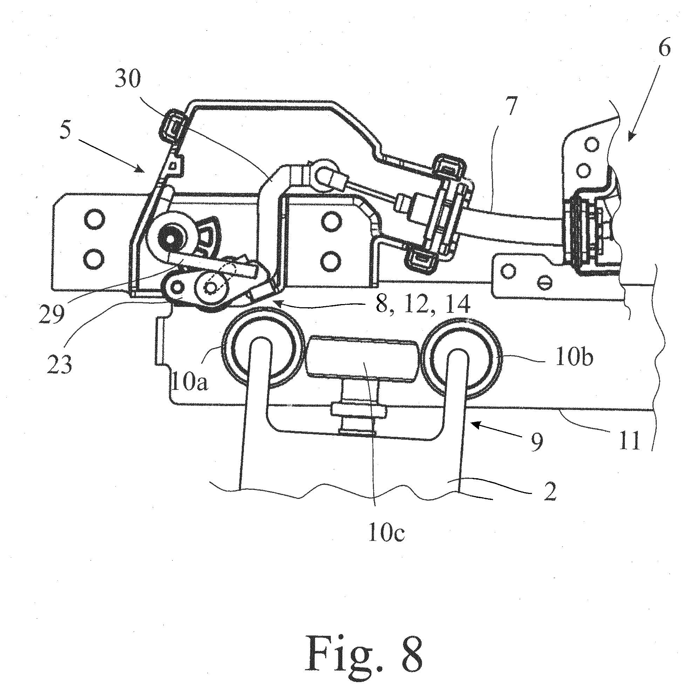

Die Fixiereinrichtung 1 ist ferner in einen Lösezustand bringbar, in dem sie die Schiebetür 2 im montierten Zustand in Schließrichtung freigibt (Fig. 4, 8).

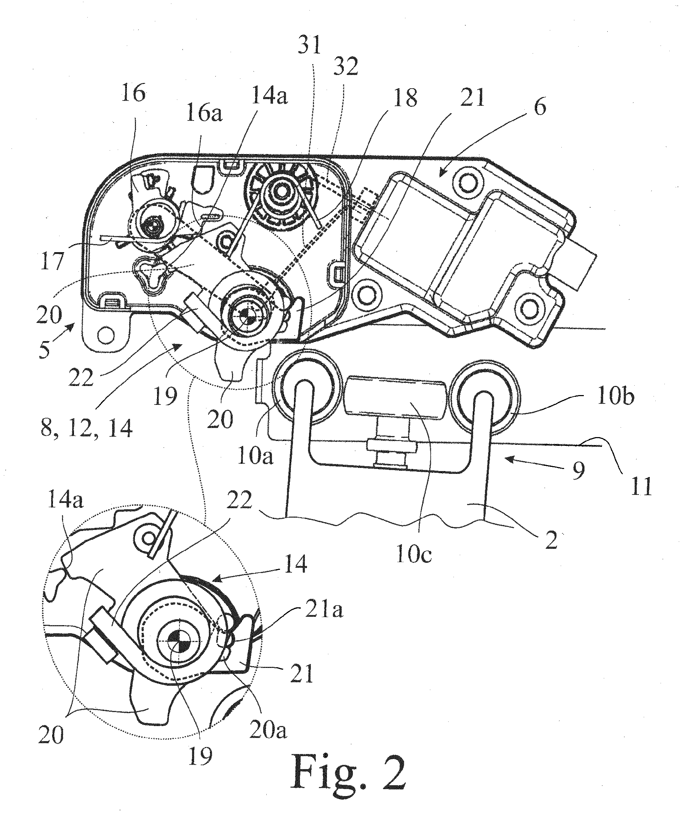

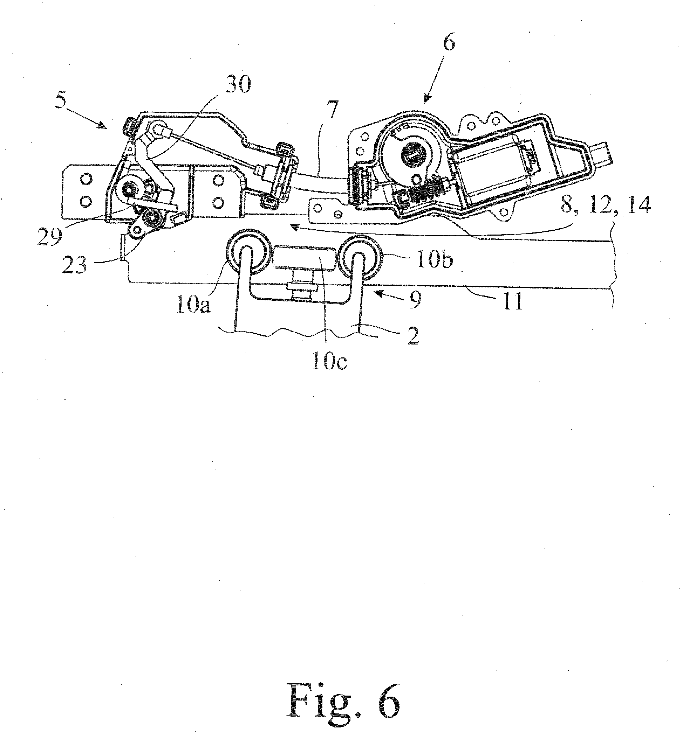

Bei beiden dargestellten Ausführungsbeispielen ist es so, dass eine Antriebsanordnung 6 vorgesehen ist, mittels der die Fixiereinrichtung 1 aus dem Fixierzustand in den Lösezustand bringbar ist. Dabei kann die Fixiereinrichtung 1 mit der Antriebsanordnung 6 eine integrierte Baueinheit bilden (Fig. 2-5). Denkbar ist aber auch, dass die Antriebsanordnung 6 und die Fixieranordnung 1 im übrigen separat voneinander ausgestaltet sind (Fig. 6-9). Im letztgenannten Fall ist die Antriebsanordnung 6 über ein Fern-Kraftübertragungsmittel, insbesondere über einen Bowdenzug 7, mit der Fixiereinrichtung 1 im Übrigen gekoppelt.

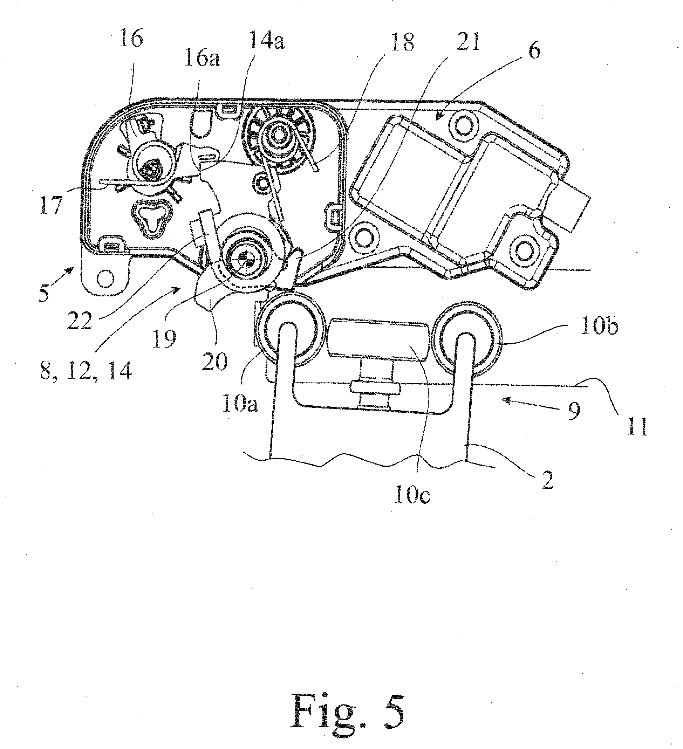

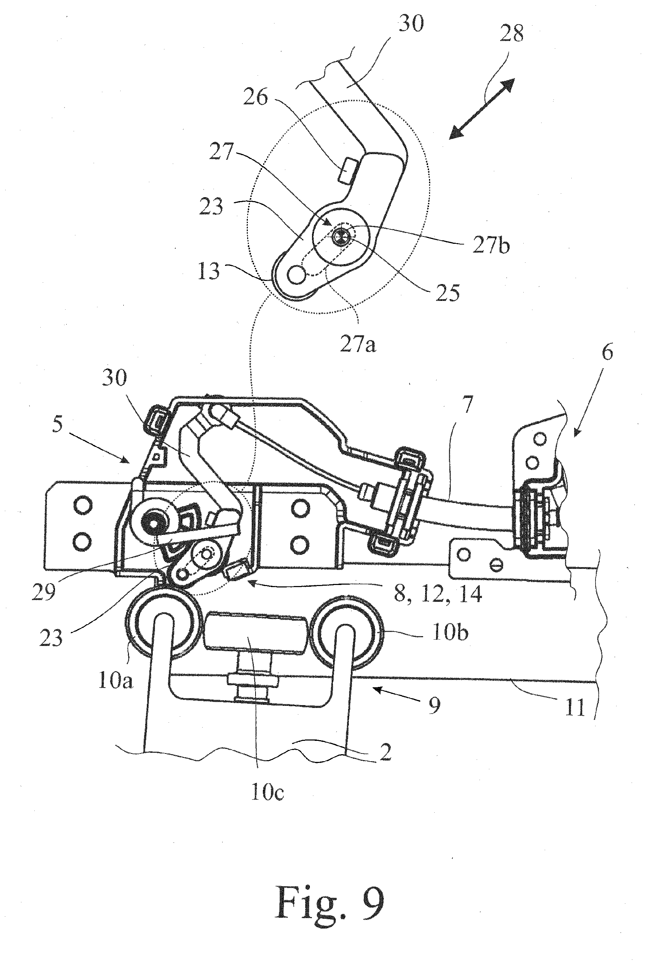

Wesentlich ist nun, dass der Fixier-Kraftwirkungskette 5 ein nachgiebiger Abschnitt 8 zugeordnet ist, der eine manuelle Schließ-Schiebebetätigung erlaubt, ohne dass die Fixiereinrichtung 1 zuvor in den Lösezustand überführt worden ist. Der nachgiebige Abschnitt 8 kommt vorschlagsgemäß zum Tragen, wenn die in der Offenstellung fixierte Schiebetür (Fig. 3, 7) mit Überlast in Schließrichtung betätigt wird. Sofern die Überlast oberhalb einer vorbestimmten Grenzlast liegt, gibt der nachgiebige Abschnitt 8 in noch zu erläuternder Weise nach, wodurch die Schiebetür 2 in Schließrichtung freigegeben wird (Fig. 5, 9). Dies wird weiter unten im Detail erläutert.

Wie aus der Zeichnung ersichtlich, ist der Schiebetür 2 hier und vorzugsweise eine Laufrollenanordnung 9 mit mindestens einer Laufrolle 10a-c zugeordnet, wobei die Schiebetür 2 über die Laufrollenanordnung 9 in einer Führungsschiene 11 des Kraftfahrzeugs 3 geführt ist. Die Laufrollen 10a, 10b dienen hier und vorzugsweise der Längsführung, während die Laufrolle 10c der Abstützung der Gewichtskraft der Schiebetür 2 dient.

Interessant bei den dargestellten und insoweit bevorzugten Ausführungsbeispielen ist die Tatsache, dass die Fixiereinrichtung 1 zur Fixierung der Schiebetür 2 in der Offenstellung mit der Laufrollenanordnung 9, hier und vorzugsweise mit der Laufrolle 10a der Laufrollenanordnung 9, in Eingriff bringbar ist. Dies zeigen am besten die Fig. 3 und 7.

Bei den dargestellten und insoweit bevorzugten Ausführungsbeispielen geht die überlastbedingte Freigabe der Schiebetür 2 ferner nicht mit einer Verstellung der Fixiereinrichtung 1 in den Lösezustand einher. Dies ist insoweit vorteilhaft, als eine von einer der Schiebetür 2 zugeordneten elektronischen Türsteuerung unbemerkte Verstellung des Zustands der Fixiereinrichtung 1 nicht auftreten kann. Eine solche unbemerkte Verstellung des Zustands der Fixiereinrichtung 1 birgt grundsätzlich das Risiko einer Fehlansteuerung in sich.

Alternativ ist es aber auch denkbar, dass die überlastbedingte Freigabe der Schiebetür 2 doch mit einer Verstellung der Fixiereinrichtung 1 in den Lösezustand einhergeht. Bei geeigneter Auslegung lässt sich damit ein eventuell erforderliches Nachführen der Fixiereinrichtung 1 in den Lösezustand vermeiden.

Bei beiden dargestellten Ausführungsbeispielen ist ein verstellbares Eingriffselement 12 vorgesehen, das in eine Fixierstellung bringbar ist, in der es den fixierenden Eingriff zwischen der Schiebetür 2 und der Kraftfahrzeugkarosserie 4 herstellt (Fig. 3, 7). Das Eingriffselement 12 ist ferner in eine Lösestellung bringbar, in der es die Schiebetür 2 in Schließrichtung freigibt (Fig. 4, 8). Hier und vorzugsweise ist es in diesem Zusammenhang so, dass das Eingriffselement 12 in fixierenden Eingriff mit einer Komponente der Schiebetür 2, hier und vorzugsweise mit der Laufrollenanordnung 9 der Schiebetür 2, bringbar ist. Entsprechend befindet sich die Fixiereinrichtung 1 an der Kraftfahrzeugkarosserie 4, hier im Bereich der der Schiebetür 2 zugeordneten Führungsschiene 11.

Eine besonders einfache und gleichzeitig kompakte mechanische Konstruktion ergibt sich dadurch, dass das Eingriffselement 12 dem nachgiebigen Abschnitt 8 zugeordnet ist und durch die oben angesprochene, manuelle Schließ-Schiebebetätigung der in der Offenstellung fixierten Schiebetür 2 mit Überlast nachgibt und dadurch die Schiebetür 2 in Schließrichtung freigibt. Diese Situation ist in den Fig. 5 und 9 dargestellt.

Es ergibt sich aus einer Zusammenschau der Fig. 5 und 9 ferner, dass das Eingriffselement 12 während der überlastbedingten Freigabe der Schiebetür 2 in Reibeingriff mit einer Komponente der Schiebetür 2, hier mit der Laufrollenanordnung 9, kommt. Um die entstehende Reibung, insbesondere Gleitreibung, und damit verbundene, ungewünschte Effekte, wie den Stick-Slip-Effekt, zu vermeiden, ist es vorzugsweise vorgesehen, dass das Eingriffselement 12 für den fixierenden Eingriff eine Eingriffsfläche aufweist, die von einer Rolle 13 bereitgestellt wird.

Eine besonders robuste und gleichzeitig geräuscharme Ausgestaltung des Eingriffselements 12 zeigen die Fig. 2-5. Hier ist das Eingriffselement 12 eine Drehfalle 14 mit einer maulartigen Ausformung 15. Der Drehfalle 14 ist eine Sperrklinke 16 zugeordnet, die in eine eingefallene Stellung (Fig. 3, 5), in der sie die Drehfalle 14 in ihrer Fixierstellung hält, und in eine ausgehobene Stellung (Fig. 4), in der sie die Drehfalle 14 freigibt, bringbar ist. Fig. 3 zeigt, dass die in der eingefallenen Stellung befindliche Sperrklinke 16 derart mit der Drehfalle 14 in Eingriff steht, dass ein Schwenken der Drehfalle 14 in Fig. 3 gegen den Uhrzeigersinn durch die Sperrklinke 16 gesperrt wird. Erst wenn die Sperrklinke 16 durch die Antriebsanordnung 6 in die ausgehobene Stellung gebracht wurde (Fig. 4) kann die Drehfalle 14 in Fig. 4 gegen den Uhrzeigersinn schwenken und die Schiebetür 2 in Schließrichtung freigeben. Andererseits bewirkt eine Öffnungs-Schiebebetätigung der Schiebetür 2 einen Eingriff der Laufrollenanordnung 9 mit der Drehfalle 14, wodurch die Drehfalle 14 in der Zeichnung im Uhrzeigersinn gedreht wird, bis die Sperrklinke 16 in die Drehfalle 14 einfällt. Dies ergibt sich vom Übergang von Fig. 2 auf Fig. 3. Für den sperrenden Eingriff ist die Sperrklinke 16 mit einer Raste 16a und die Drehfalle mit einer Gegenraste 14a ausgestattet.

Um ein sicheres Einfallen der Sperrklinke 16 bei einer Öffnungs-Schiebebetätigung der Schiebetür 2 zu gewährleisten, ist die Sperrklinke 16 durch eine Sperrklinkenfeder 17 in Einfallrichtung federbelastet. Die Drehfalle 14 ist mittels einer Drehfallenfeder 18 in Richtung der Lösestellung federbelastet.

Hier und vorzugsweise dient die maulartige Ausformung 15 dem fixierenden Eingriff mit einer schiebetürseitigen Komponente, hier und vorzugsweise mit der Laufrolle 10a der der Schiebetür 2 zugeordneten Laufrollenanordnung 9. Dabei ist die maulartige Ausformung 15 gerade so exzentrisch bezogen auf die Schwenkachse 19 der Drehfalle 14 angeordnet, dass eine Öffnungs-Schiebebetätigung, wie oben angesprochen, ein Schwenken der Drehfalle 14 in die Fixierstellung bewirkt.

Der Formgebung der maulartigen Ausformung 15 kommt vorliegend besondere Bedeutung zu. Hier und vorzugsweise verläuft die maulartige Ausformung 15 entlang eines Kreisbogenabschnitts K, wobei weiter vorzugsweise der Radius R₁ des Kreisbogenabschnitts K geringfügig größer als der Radius R₂ der der maulartigen Ausformung 15 zugeordneten Laufrolle 10a ist. Hier und vorzugsweise ist es vorgesehen, dass sich der Kreisbogenabschnitt K über einen Winkelbereich von weniger als 180° erstreckt. Weiter ist der Darstellung gemäß Fig. 3 zu entnehmen, dass sich der Radius R₁ der maulartigen Ausformung 15 zu den beiden Enden des Kreisbogenabschnitts K geringfügig vergrößert. Mit anderen Worten öffnet sich die maulartige Ausformung 15 an den beiden Enden des Kreisbogenabschnitts K geringfügig.

Grundsätzlich kann es sich bei der Drehfalle 14 um ein scheibenartiges Bauteil handeln, das entsprechend aus scheibenartigen Teilen zusammengesetzt ist, insbesondere aus Stanzteilen besteht. Das Eingriffselement 12 kommt dann mit einer der Schmalseiten der Drehfalle 14 in Eingriff mit der Laufrolle 10a. In diesem Zusammenhang kann es vorteilhaft sein, die Berührfläche zwischen der Drehfalle 14 und der Laufrolle 10a zu erhöhen, beispielsweise, indem die Kante der maulartigen Ausformung 15 zumindest stellenweise umgebogen wird. Denkbar ist auch, die maulartige Ausformung 15 mit einem Einsatz zu versehen.

Der Begriff "maulartige Ausformung" ist vorliegend weit zu verstehen. Hierunter fallen alle Ausformungen, mit denen eine Komponente der Schiebetür 2, hier und vorzugsweise die Laufrolle 10a, zumindest zum Teil übergriffen werden kann. Entsprechend fällt unter eine solche maulartige Ausformung 15 auch eine Ausgestaltung nach Art einer Prismenaufnahme, so dass die maulartige Ausformung 15 im Wesentlichen eine Zweipunktaufnahme für die Laufrolle 10a bereitstellt.

Besonders interessant bei dem in den Fig. 2-5 dargestellten Ausführungsbeispiel ist die Tatsache, dass die als Eingriffselement 12 ausgestaltete Drehfalle 14 eine einfache Realisierung des vorschlagsgemäßen, nachgiebigen Abschnitts 8 bereitstellt. Die Drehfalle ist zweiteilig ausgestaltet, wobei die beiden Drehfallenteile 20, 21 federvorgespannt miteinander gekoppelt sind. Die Federvorspannung der beiden Drehfallenteile 20, 21 erfolgt mittels einer einfachen, vorzugsweise als Schenkelfeder ausgestalteten Kopplungsfeder 22.

Ein Drehfallenteil 20 übernimmt den Eingriff mit der Sperrklinke 16 und weist entsprechend die oben angesprochene Gegenraste 14a auf. Das andere Drehfallenteil 21 stellt hingegen den Teil der maulartigen Ausformung 15 bereit, der die für die Fixierung der Schiebetür 2 erforderliche Fixierkraft auf die Schiebetür 2, hier auf die Laufrolle 10a, überträgt. Die Zeichnung zeigt, dass sich im Normalfall, also ohne eine oben angesprochene Überlastbetätigung, die beiden Drehfallenteile 20, 21 zu der maulartigen Ausformung 15 ergänzen.

Eine besonders kompakte Ausgestaltung ergibt sich dadurch, dass die beiden Drehfallenteile 20, 21 um die Schwenkachse 19 der Drehfalle 14 schwenkbar gelagert sind.

Im Normalfall, also ohne Überlastbetätigung, werden die beiden Drehfallenteile 20, 21 mittels der Koppelfeder 22 gegeneinander gedrückt, wofür das Drehfallenteil 20 den Anschlag 20a und das andere Drehfallenteil 21 den Anschlag 21a aufweist.

Wesentlich für die Funktionsweise der zweiteiligen Drehfalle 14 ist nun, dass die Kopplung zwischen den beiden Drehfallenteilen 20, 21 bei einer oben angesprochenen, manuellen Schließ-Schiebebetätigung der in der Offenstellung fixierten Schiebetür 2 mit Überlast nachgibt und dadurch die Schiebetür 2 in Schließrichtung freigibt. Dies ist der Darstellung gemäß Fig. 5 zu entnehmen. Das Drehfallenteil 20 ist zwar durch die Sperrklinke 16 blockiert. Allerdings erlaubt die Nachgiebigkeit der Koppelfeder 22 eine Auslenkung des Drehfallenteils 21 in Fig. 5 gegen den Uhrzeigersinn und aus dem Bewegungsbereich der Laufrolle 10a heraus, so dass die Laufrolle 10a von der Drehfalle 14 und damit die Schiebetür 2 insgesamt in Schließrichtung freigegeben ist.

In einer nicht erfindungsgemäßen Ausführung kann alternativ oder zusätzlich zu der oben genannten Zweiteiligkeit der Drehfalle 14 mit zwischengeschalteter Koppelfeder 22 die Drehfalle 14 grundsätzlich aus einem elastisch nachgiebigen Werkstoff ausgestaltet sein. Beispielsweise ist es denkbar, dass sich die maulartige Ausformung 15 aufgrund der Eigenelastizität der Drehfalle 14 im Überlastfall aufweitet.

Alternativ zu der oben angesprochenen, zweiteiligen Drehfalle 14 zur Realisierung des vorschlagsgemäßen, nachgiebigen Abschnitts 8 kann es weiter in einer nicht erfindungsgemäßen Ausführung vorgesehen sein, dass der haltende Eingriff zwischen der Sperrklinke 16 und der Drehfalle 14 bei einer manuellen Schließ-Schiebebetätigung der in der Offenstellung fixierten Schiebetür 2 mit Überlast nachgibt und die Drehfalle 14 in ihre Öffnungsrichtung freigibt. Dies könnte beispielsweise dadurch vorgesehen sein, dass die Raste 16a der Sperrklinke 16 mit der Gegenraste 14a der Drehfalle 14 eine Keilschräge bildet, über die die Drehfalle 14 bei Überlast an der Sperrklinke 16 entlangläuft, bis die Sperrklinke 16 außer haltenden Eingriff von der Drehfalle 14 kommt. Mit dieser Ausgestaltung lässt sich der konstruktive Aufwand für die vorschlagsgemäße Fixiereinrichtung 1 weiter reduzieren.

Die in den Fig. 6 bis 9 dargestellte Ausführungsform einer vorschlagsgemäßen Fixiereinrichtung 1 ist mit wenigen Teilen und insbesondere kompakt realisierbar. Hier ist das Eingriffselement 12 eine schwenkbar gelagerte Fixier-Sperrklinke 23, die in Einfallrichtung von der Lösestellung (Fig. 8) in die Fixierstellung (Fig. 6, 7) vorgespannt ist. In der Zeichnung handelt es sich bei dieser Vorspannung um eine entgegen dem Uhrzeigersinn gerichtete Vorspannung. Die Fixierwirkung der Fixier-Sperrklinke 23 ergibt sich dadurch, dass die in der Fixierstellung befindliche Fixier-Sperrklinke 23 durch den fixierenden Eingriff zwischen Schiebetür 2 und Kraftfahrzeugkarosserie 3 weiter in Einfallrichtung, in der Zeichnung entgegen dem Uhrzeigersinn drängt. Dies ist dadurch realisiert, dass die Kraftwirkungslinie 24 der Fixierkraft derart an der Schwenkachse 25 vorbeiläuft, dass die Fixier-Sperrklinke 23 in einen Sperrklinkenanschlag 26 gedrückt wird (Fig. 7).

Hier und vorzugsweise ist es wie bei dem erstgenannten Ausführungsbeispiel so, dass das Eingriffselement 12, hier die Fixier-Sperrklinke 23, zur Fixierung der Schiebetür 2 in Eingriff mit einer Komponente der Schiebetür 2, hier und vorzugsweise mit einer Laufrolle 10a einer Laufrollenanordnung 9 der Schiebetür 2 bringbar ist. Wie oben angesprochen, ist das Eingriffselement 12 mit einer Rolle 13 ausgestattet, um die Reibung zwischen der Laufrolle 10a und dem Eingriffselement 12, hier der Fixier-Sperrklinke 23, weitgehend zu reduzieren.

Die überlastbedingte Freigabe der Schiebetür 2 ist bei dem in den Fig. 6 bis 9 dargestellten Ausführungsbeispiel auf ganz besonders einfache Weise realisiert. In diesem Zusammenhang ist es vorgesehen, dass die Schwenklagerung 27 der Fixier-Sperrklinke 23 bei einer manuellen Schließ-Schiebebetätigung der in der Offenstellung fixierten Schiebetür 2 mit Überlast nachgibt und dadurch die Schiebetür 2 in Schließrichtung freigibt. Das Nachgeben der Schwenklagerung 27 ist einer Zusammenschau in den Fig. 7 und 9 zu entnehmen. Im Zuge dieses Nachgebens verlagert sich die Schwenkachse 25 entlang der Verlagerungsrichtung 28, so dass die Fixier-Sperrklinke 23 aus dem Bewegungsbereich der Laufrolle 10a gedrückt wird, wie der Darstellung gemäß Fig. 9 zu entnehmen ist. Das Nachgeben bzw. die Verlagerung erfolgt bei dem dargestellten und insoweit bevorzugten Ausführungsbeispiel in einer Richtung senkrecht zu der Schwenkachse 25 der Fixier-Sperrklinke 23.

Die Schwenklagerung 27 ist bei dem dargestellten und insoweit bevorzugten Ausführungsbeispiel konstruktiv einfach gelöst. Hierfür ist die Fixier-Sperrklinke 23 beidseitig mit einem Lagerbolzen 27b ausgestattet. Die beidseitig der Fixier-Sperrklinke 23 angeordneten Lagerbolzen 27b greifen in zwei Langlöcher 27a ein, die ebenfalls beidseitig der Fixier-Sperrklinke 23 angeordnet sind. Mittels der Kopplungsfeder 29 wird die Fixier-Sperrklinke 23, insbesondere die Schwenkachse 25 der Fixier-Sperrklinke 23, in der in den Fig. 7 und 8 dargestellten Ausgangsstellung gehalten. Erst im Überlastfall wandern die Lagerbolzen 27b in den Langlöchern 27a in die in Fig. 9 dargestellte Position, so dass, wie oben erläutert, die Schiebetür 2 freigegeben ist.

Auch für die Normalbetätigung, in der keine Überlastbetätigung stattfindet, ist die in den Fig. 6 bis 9 dargestellte Fixiereinrichtung 1 einfach und robust aufgebaut. Eine Öffnungs-Schiebebetätigung von der in Fig. 6 dargestellten Situation in die in Fig. 7 dargestellte Situation ist einfach mit einer Aushebebewegung der Fixier-Sperrklinke 23 verbunden, indem die Laufrolle 10a in Eingriff mit der Fixier-Sperrklinke 23 kommt. Die ausgehobene Stellung der Fixier-Sperrklinke 23 ist in der Detaildarstellung in Fig. 7 in gestrichelter Linie dargestellt. Sobald die Laufrolle 10a die Fixier-Sperrklinke 23 passiert hat, schnappt die Fixier-Sperrklinke 23 federgetrieben in die in Fig. 7 in durchgezogener Linie dargestellte Stellung, in der sie die Schiebetür 2 wie oben erläutert fixiert.

Die motorische Verstellung der in den Fig. 6 bis 9 dargestellten Fixiereinrichtung 1 erfolgt mittels der Antriebsanordnung 6, die auf einen Auslösehebel 30 der Fixiereinrichtung 1 wirkt. Der Auslösehebel 30 ist mit dem oben angesprochenen Anschlag 26 der Fixier-Sperrklinke 23 verbunden, so dass ein Verschwenken des Auslösehebels 30 um die Schwenkachse 25 eine Mitnahme der Fixier-Sperrklinke 23 in die in Fig. 8 dargestellte Lösestellung verursacht. Die Schiebetür 2 ist dann wiederum in Schließrichtung freigegeben.

Für die Ausgestaltung der Antriebsanordnung 6 sind zahlreiche Varianten aus dem Stand der Technik bekannt. Die in den Fig. 2 bis 5 dargestellte Antriebsanordnung 6 weist in ihrem Antriebsstrang ein flexibles Zugmittel 31 auf, das auf eine Welle 32 der Antriebsanordnung 6 - bzw. abgewickelt wird. Bei dem in den Fig. 6 bis 9 dargestellten Ausführungsbeispiel ist die Antriebsanordnung 6 mit dem oben angesprochenen Bowdenzug 7 ausgestattet, der eine separate Ausgestaltung der Antriebsanordnung 6 von der Fixiereinrichtung 1 im Übrigen erlaubt. Im erstgenannten Fall kann es sich bei dem flexiblen Zugmittel um ein Seil, ein Band, eine Kette o. dgl. handeln.

Nach einer weiteren Lehre, der ebenfalls eigenständige Bedeutung zukommt, wird eine Schiebetüranordnung eines Kraftfahrzeugs 3 mit einer Schiebetür 2, die an der Kraftfahrzeugkarosserie 4 zwischen einer Offenstellung und einer Schließstellung verstellbar ist, beansprucht. Die Schiebetüranordnung ist mit einer oben angesprochenen, vorschlagsgemäßen Fixiereinrichtung 1 ausgestattet.

Interessant bei der dargestellten und insoweit bevorzugten Schiebetüranordnung ist die Tatsache, dass die Fixiereinrichtung 1 an der Kraftfahrzeugkarosserie 4 angeordnet ist und ein verstellbares Eingriffselement 12 aufweist, das in eine Fixierstellung, in der es den fixierenden Eingriff zwischen der Schiebetür 2 und der Kraftfahrzeugkarosserie 4 herstellt, und in eine Lösestellung, in der es die Schiebetür 2 in Schließrichtung freigibt, bringbar ist. Dabei ist es weiter vorzugsweise so, dass das Eingriffselement 12 in fixierenden Eingriff mit einer Komponente der Schiebetür 2, hier und vorzugsweise mit einer Laufrollenanordnung 9 der Schiebetür 2, bringbar ist.

Eine obige, karosseriefeste Anordnung der Fixiereinrichtung 1 ist insbesondere vorteilhaft, da sich die elektrische Kontaktierung der Antriebsanordnung 6 unproblematisch gestaltet. Ferner kann die karosseriefeste Anordnung der Fixiereinrichtung 1 je nach Anwendungsfall bauraumbedingt vorteilhaft sein.

## Patentansprüche

1. Fixiereinrichtung für eine Schiebetür (2) eines Kraftfahrzeugs (3), wobei die Schiebetür (2) an der Kraftfahrzeugkarosserie (4) zwischen einer Offenstellung und einer Schließstellung verstellbar ist, wobei der Schiebetür eine Laufrollenanordnung (9) mit mindestens einer Laufrolle (10a) zugeordnet ist, wobei die Fixiereinrichtung (1) in einen Fixierzustand, in dem sie die in der Offenstellung befindliche Schiebetür (2) im montierten Zustand über eine Fixier-Kraftwirkungskette (5) an der Kraftfahrzeugkarosserie (4) fixiert, und in einen Lösezustand, in dem sie die Schiebetür (2) im montierten Zustand in Schließrichtung freigibt, bringbar ist, wobei die Fixiereinrichtung (1) aus dem Fixierzustand mittels einer Antriebsanordnung (6) motorisch in den Lösezustand bringbar ist, wobei der Fixier-Kraftwirkungskette (5) ein nachgiebiger Abschnitt (8) zugeordnet ist, der im montierten Zustand bei einer manuellen Schließ-Schiebebetätigung der in der Offenstellung fixierten Schiebetür (2) mit Überlast, die oberhalb einer vorbestimmten Grenzlast liegt, nachgibt und dadurch die Schiebetür (2) in Schließrichtung freigibt, wobei der nachgiebige Abschnitt (8) ein verstellbares Eingriffselement (12) ist, das in eine Fixierstellung, in der es den fixierenden Eingriff zwischen der Schiebetür (2) und der Kraftfahrzeugkarosserie (4) herstellt, und in eine Lösestellung, in der es die Schiebetür (2) in Schließrichtung freigibt, bringbar ist, wobei das Eingriffselement (12) eine Drehfalle (14) mit einer maulartigen Ausformung (15) ist, **dadurch gekennzeichnet, dass** der Drehfalle (14) eine Sperrklinke (16) zugeordnet ist, die in eine eingefallene Stellung, in der sie die Drehfalle (14) in ihrer Fixierstellung hält, und in eine ausgehobene Stellung, in der sie die Drehfalle (14) freigibt, bringbar ist und
dass die Drehfalle (14) zweiteilig ausgestaltet ist, wobei die beiden Drehfallenteile (20, 21) durch eine Kopplungsfeder (22) federvorgespannt miteinander gekoppelt sind, wobei die Kopplung bei einer manuellen Schließ-Schiebebetätigung der in der Offenstellung fixierten Schiebetür (2) mit Überlast nachgibt und dadurch die Schiebetür (2) in Schließrichtung freigibt, wobei die Nachgiebigkeit der Koppelfeder (22) eine Auslenkung des Drehfallenteils (21) gegen den Uhrzeigersinn und aus dem Bewegungsbereich der Laufrolle (10a) heraus erlaubt, so dass die Laufrolle (10a) von der Drehfalle (14) und damit die Schiebetür (2) insgesamt in Schließrichtung freigegeben ist.

2. Fixiereinrichtung nach Anspruch 1, **dadurch gekennzeichnet, dass** der Schiebetür (2) eine Laufrollenanordnung (9) mit mindestens einer Laufrolle (10a-10c) zugeordnet ist, dass die Schiebetür (2) über die Laufrollenanordnung (9) in einer Führungsschiene (11) des Kraftfahrzeugs (3) geführt ist und dass die Fixiereinrichtung (1) zur Fixierung der Schiebetür (2) in der Offenstellung mit der Laufrollenanordnung (9), insbesondere mit mindestens einer Laufrolle (10a) der Laufrollenanordnung (9), in Eingriff bringbar ist.

3. Fixiereinrichtung nach Anspruch 1 oder 2, **dadurch gekennzeichnet, dass** die überlastbedingte Freigabe der Schiebetür (2) nicht mit einer Verstellung der Fixiereinrichtung (1) in den Lösezustand einhergeht, oder, dass die überlastbedingte Freigabe der Schiebetür (2) mit einer Verstellung der Fixiereinrichtung (1) in den Lösezustand einhergeht.

4. Fixiereinrichtung nach einem der vorhergehenden Ansprüche, **dadurch gekennzeichnet, dass** das Eingriffselement (12) in fixierenden Eingriff mit einer Komponente der Schiebetür (2), insbesondere mit einer Laufrollenanordnung (9) der Schiebetür (2), bringbar ist.

5. Fixiereinrichtung nach einem der vorhergehenden Ansprüche, **dadurch gekennzeichnet, dass** die Antriebsanordnung (6) mit der Sperrklinke (16) derart gekoppelt oder koppelbar ist, dass die Sperrklinke (16) mittels der Antriebsanordnung (6) aushebbar ist.

6. Fixiereinrichtung nach einem der vorhergehenden Ansprüche, **dadurch gekennzeichnet, dass** die maulartige Ausformung (15) dem fixierenden Eingriff mit einer schiebetürseitigen Komponente, insbesondere einer der Schiebetür (2) zugeordneten Laufrollenanordnung (9), dient.

7. Fixiereinrichtung nach Anspruch 6, **dadurch gekennzeichnet, dass** die maulartige Ausformung (15) entlang eines Kreisbogenabschnitts (K) verläuft, vorzugsweise, dass der Radius (R₁) des Kreisbogenabschnitts (K) geringfügig größer als der Radius (R₂) einer der maulartigen Ausformung (15) zugeordneten Laufrolle (10a) der Laufrollenanordnung (9) ist, vorzugsweise, dass sich der Kreisbogenabschnitt (K) über einen Winkelbereich von weniger als 180° erstreckt.

8. Fixiereinrichtung nach einem der vorhergehenden Ansprüche, **dadurch gekennzeichnet, dass** die Antriebsanordnung (6) in ihrem Antriebsstrang ein flexibles Zugmittel (31), vorzugsweise ein Seil, ein Band oder eine Kette, umfasst.

9. Fixiereinrichtung für eine Schiebetür (2) eines Kraftfahrzeugs (3), wobei die Schiebetür (2) an der Kraftfahrzeugkarosserie (4) zwischen einer Offenstellung und einer Schließstellung verstellbar ist, wobei die Fixiereinrichtung (1) in einen Fixierzustand, in dem sie die in der Offenstellung befindliche Schiebetür (2) im montierten Zustand über eine Fixier-Kraftwirkungskette (5) an der Kraftfahrzeugkarosserie (4) fixiert, und in einen Lösezustand, in dem sie die Schiebetür (2) im montierten Zustand in Schließrichtung freigibt, bringbar ist, wobei die Fixiereinrichtung (1) aus dem Fixierzustand mittels einer Antriebsanordnung (6) motorisch in den Lösezustand bringbar ist, wobei der Fixier-Kraftwirkungskette (5) ein nachgiebiger Abschnitt (8) zugeordnet ist, der im montierten Zustand bei einer manuellen Schließ-Schiebebetätigung der in der Offenstellung fixierten Schiebetür (2) mit Überlast, die oberhalb einer vorbestimmten Grenzlast liegt, nachgibt und dadurch die Schiebetür (2) in Schließrichtung freigibt, wobei der nachgiebige Abschnitt (8) ein verstellbares Eingriffselement (12) ist, das in eine Fixierstellung, in der es den fixierenden Eingriff zwischen der Schiebetür (2) und der Kraftfahrzeugkarosserie (4) herstellt, und in eine Lösestellung, in der es die Schiebetür (2) in Schließrichtung freigibt, bringbar ist, wobei das Eingriffselement (12) eine schwenkbar gelagerte Fixier-Sperrklinke (23) ist, die in Einfallrichtung von der Lösestellung in die Fixierstellung vorgespannt ist und die in der Fixierstellung durch den fixierenden Eingriff zwischen Schiebetür (2) und Kraftfahrzeugkarosserie (4) weiter in Einfallrichtung drängt, **dadurch gekennzeichnet, dass** die Fixier-Sperrklinke (23) zur Fixierung der Schiebetür (2) in Eingriff mit einer Komponente der Schiebetür (2), vorzugsweise mit einer Laufrollenanordnung (9) der Schiebetür (2), bringbar ist, und
dass die Schwenklagerung (27) der Fixier-Sperrklinke (23) bei einer manuellen Schließ-Schiebebetätigung der in der Offenstellung fixierten Schiebetür (2) mit Überlast unter Verlagerung der Schwenkachse (25) der Fixier-Sperrklinke (23) entlang einer Verlagerungsrichtung (28) nachgibt, so dass die Fixier-Sperrklinke (23) aus dem Bewegungsbereich der Komponente der Schiebetür (2) gedrückt wird und dadurch die Schiebetür (2) in Schließrichtung freigibt.

10. Schiebetüranordnung eines Kraftfahrzeugs (3) mit einer Schiebetür (2), die an der Kraftfahrzeugkarosserie (4) zwischen einer Offenstellung und einer Schließstellung verstellbar ist, und mit einer Fixiereinrichtung (1) nach einem der vorhergehenden Ansprüche.

11. Schiebetüranordnung nach Anspruch 10, **dadurch gekennzeichnet, dass** die Fixiereinrichtung (1) an der Kraftfahrzeugkarosserie (4) angeordnet ist und ein verstellbares Eingriffselement (12) aufweist, das in eine Fixierstellung, in der es den fixierenden Eingriff zwischen der Schiebetür (2) und der Kraftfahrzeugkarosserie (4) herstellt, und in eine Lösestellung, in der es die Schiebetür (2) in Schließrichtung freigibt, bringbar ist, vorzugsweise, dass das Eingriffselement (12) in fixierenden Eingriff mit einer Komponente der Schiebetür (2), insbesondere mit einer Laufrollenanordnung (9) der Schiebetür (2), bringbar ist.

## Claims

1. Fixing device for a sliding door (2) of a motor vehicle (3), wherein the sliding door (2) is adjustable on the motor vehicle body (4) between an open position and a closed position, wherein the sliding door is assigned a running roller arrangement (9) with at least one running roller (10a), wherein the fixing device (1) can be brought into a fixing state, in which said fixing device fixes the sliding door (2), which is in the open position, in the mounted state on the motor vehicle body (4) via a fixing force effect chain (5), and into a release state, in which said fixing device releases the sliding door (2) in the mounted state in the closing direction, wherein the fixing device (1) can be brought in a motorized manner out of the fixing state into the release state by means of a drive arrangement (6), wherein the fixing force effect chain (5) is assigned a flexible section (8) which, in the mounted state, during a manual closing pushing actuation of the sliding door (2), which is fixed in the open position, with an overload lying above a predetermined limit value, yields and thereby releases the sliding door (2) in the closing direction, wherein the flexible section (8) is an adjustable engagement element (12) which can be brought into a fixing position, in which it produces the fixing engagement between the sliding door (2) and the motor vehicle body (4), and into a release position, in which it releases the sliding door (2) in the closing direction, wherein the engagement element (12) is a rotary latch (14) with a mouth-like formation (15), **characterized in that** the rotary latch (14) is assigned a pawl (16) which can be brought into an engaged position, in which it holds the rotary latch (14) in its fixing position, and into a raised position, in which it releases the rotary latch (14), and **in that** the rotary latch (14) is of two-part configuration, wherein the two rotary latch parts (20, 21) are coupled to each other in a spring-prestressed manner by means of a coupling spring (22), wherein, during a manual closing pushing actuation of the sliding door (2), which is fixed in the open position, with an overload, the coupling yields and thereby releases the sliding door (2) in the closing direction, wherein the flexibility of the coupling spring (22) permits deflection of the rotary latch part (21) anticlockwise and out of the range of movement of the running roller (10a), and thus the running roller (10a) is released by the rotary latch (14) and therefore the sliding door (2) as a whole is released in the closing direction.

2. Fixing device according to Claim 1, **characterized in that** the sliding door (2) is assigned a running roller arrangement (9) with at least one running roller (10a-10c), **in that** the sliding door (2) is guided in a guide rail (11) of the motor vehicle (3) via the running roller arrangement (9), and **in that** the fixing device (1) for fixing the sliding door (2) in the open position can be brought into engagement with the running roller arrangement (9), in particular with the at least one running roller (10a) of the running roller arrangement (9) .

3. Fixing device according to Claim 1 or 2, **characterized in that** the overload-induced release of the sliding door (2) is not associated with an adjustment of the fixing device (1) into the release state, or **in that** the overload-induced release of the sliding door (2) is associated with an adjustment of the fixing device (1) into the release state.

4. Fixing device according to one of the preceding claims, **characterized in that** the engagement element (12) can be brought into fixing engagement with a component of the sliding door (2), in particular with a running roller arrangement (9) of the sliding door (2).

5. Fixing device according to one of the preceding claims, **characterized in that** the drive arrangement (6) is coupled or can be coupled to the pawl (16) in such a manner that the pawl (16) can be raised by means of the drive arrangement (6) .

6. Fixing device according to one of the preceding claims, **characterized in that** the mouth-like formation (15) serves for the fixing engagement with a sliding-door-side component, in particular a running roller arrangement (9) assigned to the sliding door (2).

7. Fixing device according to Claim 6, **characterized in that** the mouth-like formation (15) runs along a circular arc section (K), preferably **in that** the radius (R₁) of the circular arc section (K) is slightly larger than the radius (R₂) of a running roller (10a) of the running roller arrangement (9), said running roller being assigned to the mouth-like formation (15), preferably **in that** the circular arc section (K) extends over an angular range of less than 180°.

8. Fixing device according to one of the preceding claims, **characterized in that** the drive arrangement (6) comprises a flexible traction means (31), preferably a cable, a belt or a chain, in its drive train.

9. Fixing device for a sliding door (2) of a motor vehicle (3), wherein the sliding door (2) is adjustable on the motor vehicle body (4) between an open position and a closed position, wherein the fixing device (1) can be brought into a fixing state, in which said fixing device fixes the sliding door (2), which is in the open position, in the mounted state on the motor vehicle body (4) via a fixing force effect chain (5), and into a release state, in which said fixing device releases the sliding door (2) in the mounted state in the closing direction, wherein the fixing device (1) can be brought in a motorized manner out of the fixing state into the release state by means of a drive arrangement (6), wherein the fixing force effect chain (5) is assigned a flexible section (8) which, in the mounted state, during a manual closing pushing actuation of the sliding door (2), which is fixed in the open position, with an overload lying above a predetermined limit value, yields and thereby releases the sliding door (2) in the closing direction, wherein the flexible section (8) is an adjustable engagement element (12) which can be brought into a fixing position, in which it produces the fixing engagement between the sliding door (2) and the motor vehicle body (4), and into a release position, in which it releases the sliding door (2) in the closing direction, wherein the engagement element (12) is a pivotably mounted fixing pawl (23) which is prestressed in the engagement direction from the release position into the fixing position and which pushes further in the engagement direction in the fixing position because of the fixing engagement between sliding door (2) and motor vehicle body (4), **characterized in that** the fixing pawl (23) for fixing the sliding door (2) can be brought into engagement with a component of the sliding door (2), preferably with a running roller arrangement (9) of the sliding door (2), and **in that**, during a manual closing pushing actuation of the sliding door (2), which is fixed in the open position, with an overload, the pivot mounting (27) of the fixing pawl (23) yields, with the pivot axis (25) of the fixing pawl (23) being shifted along a shifting direction (28) such that the fixing pawl (23) is pushed out of the range of movement of the component of the sliding door (2) and thereby releases the sliding door (2) in the closing direction.

10. Sliding door arrangement of a motor vehicle (3) with a sliding door (2) which is adjustable on the vehicle body (4) between an open position and a closed position, and with a fixing device (1) according to one of the preceding claims.

11. Sliding door arrangement according to Claim 10, **characterized in that** the fixing device (1) is arranged on the motor vehicle body (4) and has an adjustable engagement element (12) which can be brought into a fixing position, in which it produces the fixing engagement between the sliding door (2) and the motor vehicle body (4), and into a release position, in which it releases the sliding door (2) in the closing direction, preferably **in that** the engagement element (12) can be brought into fixing engagement with a component of the sliding door (2), in particular with a running roller arrangement (9) of the sliding door (2) .

## Revendications

1. Dispositif de fixation pour une porte coulissante (2) d'un véhicule automobile (3), la porte coulissante (2) pouvant être déplacée entre une position ouverte et une position fermée contre la carrosserie du véhicule automobile (4), la porte coulissante étant associée à un agencement de galets de roulement (9) comprenant au moins un galet de roulement (10a), le dispositif de fixation (1) pouvant être amené dans un état de fixation, dans lequel il fixe contre la carrosserie du véhicule automobile (4) la porte coulissante (2) se trouvant dans la position ouverte dans l'état monté par le biais d'une chaîne d'action de force de fixation (5), et dans un état de libération, dans lequel il libère la porte coulissante (2) dans l'état monté dans la direction de fermeture, le dispositif de fixation (1) pouvant être amené de manière motorisée dans l'état de libération depuis l'état de fixation au moyen d'un agencement d'entraînement (6),
la chaîne d'action de force de fixation (5) étant associée à une portion flexible (8) qui cède, dans l'état monté, dans le cas d'un actionnement de coulissement de fermeture manuelle de la porte coulissante (2) fixée dans la position ouverte, avec une charge excessive qui est au-dessus d'une charge limite prédéterminée, et de ce fait libère la porte coulissante (2) dans la direction de fermeture, la portion flexible (8) étant un élément d'engagement réglable (12) qui peut être amené dans une position de fixation dans laquelle il établit l'engagement de fixation entre la porte coulissante (2) et la carrosserie du véhicule automobile (4), et dans une position de libération dans laquelle il libère la porte coulissante (2) dans la direction de fermeture, l'élément d'engagement (12) étant un pêne (14) avec une partie façonnée (15) en forme de mors,
**caractérisé en ce que**
le pêne (14) est associé à un cliquet d'arrêt (16) qui peut être amené dans une position rentrée dans laquelle il retient le pêne (14) dans sa position de fixation, et dans une position sortie dans laquelle il libère le pêne (14), et
**en ce que** le pêne (14) est configuré en deux parties, les deux parties du pêne (20, 21) étant accouplées l'une à l'autre avec une précontrainte par ressort par un ressort d'accouplement (22), l'accouplement, dans le cas d'un actionnement de coulissement de fermeture manuelle de la porte coulissante (2) fixée dans la position ouverte avec une charge excessive cédant et de ce fait libérant la porte coulissante (2) dans la direction de fermeture, la flexibilité du ressort d'accouplement (22) permettant une déviation de la partie du pêne (21) dans le sens inverse des aiguilles d'une montre et hors de la plage de déplacement du galet de roulement (10a), de telle sorte que le galet de roulement (10a) soit libéré par le pêne (14) et que par conséquent la porte coulissante (2) soit dans l'ensemble libérée dans la direction de fermeture.

2. Dispositif de fixation selon la revendication 1, **caractérisé en ce que** la porte coulissante (2) est associée à un agencement de galets de roulement (9) comprenant au moins un galet de roulement (10a-10c), **en ce que** la porte coulissante (2) est guidée par le biais de l'agencement de galets de roulement (9) dans un rail de guidage (11) du véhicule automobile (3) et **en ce que** le dispositif de fixation (1) peut être amené en prise, pour la fixation de la porte coulissante (2) dans la position ouverte, avec l'agencement de galets de roulement (9), en particulier avec au moins un galet de roulement (10a) de l'agencement de galets de roulement (9).

3. Dispositif de fixation selon la revendication 1 ou 2, **caractérisé en ce que** la libération provoquée par la charge excessive de la porte coulissante (2) n'est pas associée à un déplacement du dispositif de fixation (1) dans l'état de libération, ou **en ce que** la libération provoquée par la charge excessive de la porte coulissante (2) est associée à un déplacement du dispositif de fixation (1) dans l'état de libération.

4. Dispositif de fixation selon l'une quelconque des revendications précédentes, **caractérisé en ce que** l'élément d'engagement (12) peut être amené en engagement de fixation avec un composant de la porte coulissante (2), en particulier avec un agencement de galets de roulement (9) de la porte coulissante (2).

5. Dispositif de fixation selon l'une quelconque des revendications précédentes, **caractérisé en ce que** l'agencement d'entraînement (6) est ou peut être accouplé au cliquet d'arrêt (16) de telle sorte que le cliquet d'arrêt (16) puisse être soulevé au moyen de l'agencement d'entraînement (6).

6. Dispositif de fixation selon l'une quelconque des revendications précédentes, **caractérisé en ce que** la partie façonnée (15) en forme de mors sert à l'engagement de fixation avec un composant du côté de la porte coulissante, en particulier avec un agencement de galets de roulement (9) associé à la porte coulissante (2).

7. Dispositif de fixation selon la revendication 6, **caractérisé en ce que** la partie façonnée (15) en forme de mors s'étend le long d'une portion d'arc de cercle (K), de préférence **en ce que** le rayon (R₁) de la portion d'arc de cercle (*K*) est légèrement supérieur au rayon (R₂) d'un galet de roulement (10a) de l'agencement de galets de roulement (9) associé à la partie façonnée (15) en forme de mors, de préférence **en ce que** la portion d'arc de cercle (K) s'étend sur une plage angulaire inférieure à 180°.

8. Dispositif de fixation selon l'une quelconque des revendications précédentes, **caractérisé en ce que** l'agencement d'entraînement (6) comprend dans sa chaîne cinématique un moyen de traction flexible (31), de préférence un câble, une bande ou une chaîne.

9. Dispositif de fixation pour une porte coulissante (2) d'un véhicule automobile (3), la porte coulissante (2) pouvant être déplacée entre une position ouverte et une position fermée contre la carrosserie du véhicule automobile (4), le dispositif de fixation (1) pouvant être amené dans un état de fixation, dans lequel il fixe contre la carrosserie du véhicule automobile (4) la porte coulissante (2) se trouvant dans la position ouverte dans l'état monté par le biais d'une chaîne d'action de force de fixation (5), et dans un état de libération, dans lequel il libère la porte coulissante (2) dans l'état monté dans la direction de fermeture, le dispositif de fixation (1) pouvant être amené de manière motorisée dans l'état de libération depuis l'état de fixation au moyen d'un agencement d'entraînement (6), la chaîne d'action de force de fixation (5) étant associée à une portion flexible (8) qui cède, dans l'état monté, dans le cas d'un actionnement de coulissement de fermeture manuelle de la porte coulissante (2) fixée dans la position ouverte, avec une charge excessive qui est au-dessus d'une charge limite prédéterminée, et de ce fait libère la porte coulissante (2) dans la direction de fermeture, la portion flexible (8) étant un élément d'engagement réglable (12) qui peut être amené dans une position de fixation dans laquelle il établit l'engagement de fixation entre la porte coulissante (2) et la carrosserie du véhicule automobile (4), et dans une position de libération dans laquelle il libère la porte coulissante (2) dans la direction de fermeture, l'élément d'engagement (12) étant un cliquet d'arrêt de fixation (23) fixé de manière pivotante, qui, dans la direction rentrée, est précontraint de la position de libération dans la position de fixation et qui, dans la position de fixation, pénètre davantage dans la direction rentrée par l'engagement de fixation entre la porte coulissante (2) et la carrosserie du véhicule automobile (4), **caractérisé en ce que** le cliquet d'arrêt de fixation (23), pour la fixation de la porte coulissante (2), peut être amené en prise avec un composant de la porte coulissante (2), de préférence avec un agencement de galets de roulement (9) de la porte coulissante (2), et **en ce que** le support pivotant (27) du cliquet d'arrêt de fixation (23), lors d'un actionnement de coulissement de fermeture manuelle de la porte coulissante (2) fixée dans la position ouverte, avec une charge excessive, cède en déplaçant l'axe de pivotement (25) du cliquet d'arrêt de fixation (23) le long d'une direction de déplacement (28) de telle sorte que le cliquet d'arrêt de fixation (23) soit pressé hors de la région de déplacement du composant de la porte coulissante (2) et libère de ce fait la porte coulissante (2) dans la direction de fermeture.

10. Agencement de porte coulissante d'un véhicule automobile (3) comprenant une porte coulissante (2) qui peut être déplacée contre la carrosserie du véhicule automobile (4) entre une position ouverte et une position fermée, et comprenant un dispositif de fixation (1) selon l'une quelconque des revendications précédentes.

11. Agencement de porte coulissante selon la revendication 10, **caractérisé en ce que** le dispositif de fixation (1) est disposé au niveau de la carrosserie du véhicule automobile (4) et présente un élément d'engagement réglable (12) qui peut être amené dans une position de fixation dans laquelle il établit l'engagement de fixation entre la porte coulissante (2) et la carrosserie du véhicule automobile (4), et dans une position de libération dans laquelle il libère la porte coulissante (2) dans la direction de fermeture, de préférence **en ce que** l'élément d'engagement (12) peut être amené en engagement de fixation avec un composant de la porte coulissante (2), en particulier avec un agencement de galets de roulement (9) de la porte coulissante (2).
